(19) Europäisches Patentamt
European Patent Office
Office européen des brevets

(11) **EP 3 255 027 B1**

(12) **EUROPEAN PATENT SPECIFICATION**

(45) Date of publication and mention
of the grant of the patent:
**18.12.2019 Bulletin 2019/51**

(51) Int Cl.:
***C04B 41/86*** *(2006.01)*  ***C04B 41/89*** *(2006.01)*

(21) Application number: **17174481.6**

(22) Date of filing: **06.06.2017**

(54) **COATINGS FOR OXIDATION PROTECTION OF COMPOSITES**

BESCHICHTUNGEN ZUM OXIDATIONSSCHUTZ VON VERBUNDWERKSTOFFEN

REVÊTEMENTS POUR LA PROTECTION CONTRE L'OXYDATION DE COMPOSITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2016 US 201615174537**

(43) Date of publication of application:
**13.12.2017 Bulletin 2017/50**

(73) Proprietor: **Goodrich Corporation
Charlotte, NC 28217-4578 (US)**

(72) Inventor: **Mazany, Anthony
Amelia Island, FL 32034 (US)**

(74) Representative: **Dehns
St. Bride's House
10 Salisbury Square
London EC4Y 8JD (GB)**

(56) References cited:
**EP-A1- 3 072 865    EP-A1- 3 222 602
EP-A2- 2 767 529    US-A1- 2004 038 043**

**Description**

FIELD

The present disclosure relates generally to carbon-carbon composites and, more specifically, to oxidation protection systems for carbon-carbon composite structures.

BACKGROUND

Oxidation protection systems for carbon-carbon composites are typically designed to minimize loss of carbon material due to oxidation at operating conditions, which include temperatures as high as 900°C (1652°F). Phosphate-based oxidation protection systems, such as disclosed in EP 2 767 529 A, may reduce infiltration of oxygen and oxidation catalysts into the composite structure. However, despite the use of such oxidation protection systems, significant oxidation of the carbon-carbon composites may still occur during operation of components such as, for example, aircraft braking systems.

SUMMARY

A method for coating a carbon-carbon composite structure is provided comprising applying a first slurry of a first phosphate glass composition on an outer surface of the composite structure. The first slurry comprises a first additive including at least one of molybdenum disulfide or tungsten disulfide. The first slurry further comprises a second additive including boron nitride. The method further includes heating the composite structure to a temperature sufficient to form a base layer adhered to the composite structure. The ratio of the first additive and the second additive is 17:1.

In various embodiments, the method may further comprise forming a first pre-slurry composition by combining the first additive with a first glass frit comprising the first phosphate glass composition. The method may further comprise forming the first slurry by combining the first pre-slurry composition with a first carrier fluid. The first carrier fluid may comprise an acid aluminum phosphate. In various embodiments, the method may further comprise applying a second slurry of a second phosphate glass composition to the base layer, and heating the composite structure to a temperature sufficient to form sealing layer adhered to the base layer. In various embodiments, the second slurry may be free of molybdenum disulfide, tungsten disulfide and boron nitride.

In various embodiments, the first phosphate glass composition may be represented by the formula $a(A'_2O)_x(P_2O_5)_{y_1}b(G_fO)_{y_2}c(A''O)_z$:

A' is selected from: lithium, sodium, potassium, rubidium, cesium, and mixtures thereof;
$G_f$ is selected from: boron, silicon, sulfur, germanium, arsenic, antimony, and mixtures thereof;
A'' is selected from: vanadium, aluminum, tin, titanium, chromium, manganese, iron, cobalt, nickel, copper, mercury, zinc, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
a is a number in the range from 1 to 5;
b is a number in the range from 0 to 10;
c is a number in the range from 0 to 30;
x is a number in the range from 0.050 to 0.500;
$y_1$ is a number in the range from 0.100 to 0.950;
$y_2$ is a number in the range from 0 to 0.20; and
z is a number in the range from 0.01 to 0.5;

$$(x + y_1 + y_2 + z) = 1;$$

and

$$x < (y_1 + y_2).$$

An article is also provided comprising a carbon-carbon composite structure and an oxidation protection composition including a base layer disposed on an outer surface of the composite structure. The base layer comprises a first phosphate glass composition having a first additive dispersed throughout the base layer. The first additive includes at least one of molybdenum disulfide or tungsten disulfide.

The base layer further comprises a boron nitride additive. A ratio of the first additive and the second additive is 17:1. In various embodiments, a sealing layer may be disposed on an outer surface of the base layer. The sealing layer may comprise a second phosphate glass composition. The sealing layer may be free of boron nitride, molybdenum disulfide and tungsten disulfide.

An oxidation protection composition is also provided comprising a first phosphate glass composition having a first additive and a second additive. The first additive includes at least one of molybdenum disulfide or tungsten disulfide. The oxidation protection composition also comprises a first carrier fluid.

The second additive includes boron nitride. A ratio of the first additive and the second additive is 17:1. The first carrier fluid may comprise an acid aluminum phosphate.

In various embodiments, the first phosphate glass composition is represented by the formula $a(A'_2O)_x(P_2O_5)_{y_1}b(G_fO)_{y_2}c(A''O)_z$:

A' is selected from: lithium, sodium, potassium, rubidium, cesium, and mixtures thereof;

$G_f$ is selected from: boron, silicon, sulfur, germanium, arsenic, antimony, and mixtures thereof;

A" is selected from: vanadium, aluminum, tin, titanium, chromium, manganese, iron, cobalt, nickel, copper, mercury, zinc, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to 5;

b is a number in the range from 0 to 10;

c is a number in the range from 0 to 30;

x is a number in the range from 0.050 to 0.500;

$y_1$ is a number in the range from 0.100 to 0.950;

$y_2$ is a number in the range from 0 to 0.20; and

z is a number in the range from 0.01 to 0.5;

$$(x + y_1 + y_2 + z)=1;$$

and

$$x < (y_1 + y_2).$$

BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

FIG. 1A illustrates a cross sectional view of an aircraft wheel braking assembly, in accordance with various embodiments;

FIG. 1B illustrates a partial side view of an aircraft wheel braking assembly, in accordance with various embodiments;

FIGS. 2A, 2B, and 2C illustrate a method for coating a composite structure in accordance with various embodiments;

FIG. 3 illustrates experimental data obtained from testing various glass compositions;

FIG. 4 illustrates further experimental data obtained from testing various glass compositions at 760°C (1400°F); and

FIG. 5 illustrates further experimental data obtained from testing various oxidation protection slurries at 760°C (1400°F).

DETAILED DESCRIPTION

The detailed description of embodiments herein makes reference to the accompanying drawings, which show embodiments by way of illustration. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option.

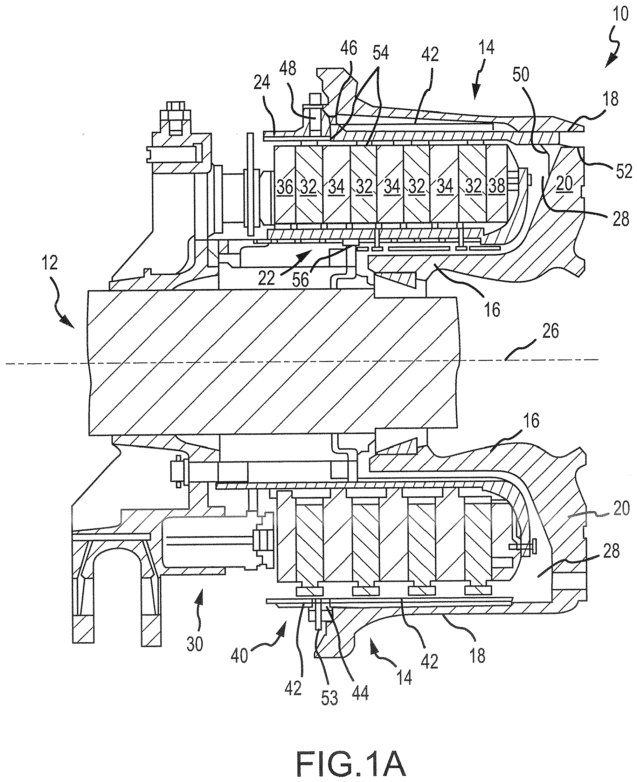

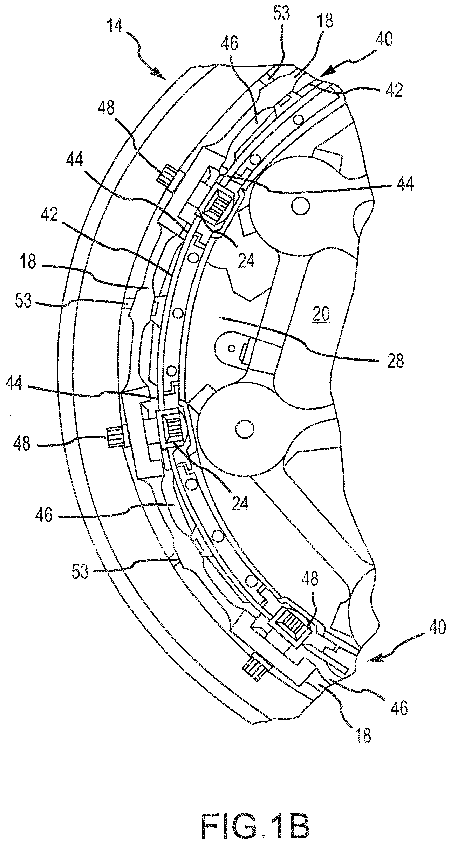

With initial reference to FIG. 1A and 1B, aircraft wheel braking assembly 10 such as may be found on an aircraft, in accordance with various embodiments is illustrated. Aircraft wheel braking assembly may, for example, comprise a bogie axle 12, a wheel 14 including a hub 16 and a wheel well 18, a web 20, a torque take-out assembly 22, one or more torque bars 24, a wheel rotational axis 26, a wheel well recess 28, an actuator 30, multiple brake rotors 32, multiple brake stators 34, a pressure plate 36, an end plate 38, a heat shield 40, multiple heat shield sections 42, multiple heat shield carriers 44, an air gap 46, multiple torque bar bolts 48, a torque bar pin 50, a wheel web hole 52, multiple heat shield fasteners 53, multiple rotor lugs 54, and multiple stator slots 56. FIG. 1B illustrates a portion of aircraft wheel braking assembly 10 as viewed into wheel well 18 and wheel well recess 28.

In various embodiments, the various components of aircraft wheel braking assembly 10 may be subjected to the application of compositions and methods for protecting the components from oxidation.

Brake disks (e.g., interleaved rotors 32 and stators 34) are disposed in wheel well recess 28 of wheel well 18. Rotors 32 are secured to torque bars 24 for rotation with wheel 14, while stators 34 are engaged with torque take-out assembly 22. At least one actuator 30 is operable to compress interleaved rotors 32 and stators 34 for stopping the aircraft. In this example, actuator 30 is shown as a hydraulically actuated piston, but many types of actuators are suitable, such as an electromechanical actuator. Pressure plate 36 and end plate 38 are disposed at opposite ends of the interleaved rotors 32 and stators 34. Rotors 32 and stators 34 can comprise any material suitable for friction disks, including ceramics or carbon materials, such as a carbon/carbon composite.

Through compression of interleaved rotors 32 and stators 34 between pressure plates 36 and end plate 38, the resulting frictional contact slows rotation of wheel 14. Torque take-out assembly 22 is secured to a stationary portion of the landing gear truck such as a bogie beam or other landing gear strut, such that torque take-out assembly 22 and stators 34 are prevented from rotating during braking of the aircraft.

Carbon-carbon composites (also referred to herein as composite structures, composite substrates, and carbon-carbon composite structures, interchangeably) in the friction disks may operate as a heat sink to absorb large amounts of kinetic energy converted to heat during slowing of the aircraft. Heat shield 40 may reflect thermal energy away from wheel well 18 and back toward rotors 32 and stators 34. With reference to FIG. 1A, a portion of wheel well 18 and torque bar 24 is removed to better illustrate heat shield 40 and heat shield segments 42. With reference to FIG. 1B, heat shield 40 is attached to wheel 14 and is concentric with wheel well 18. Individual heat shield sections 42 may be secured in place between wheel well 18 and rotors 32 by respective heat shield carriers 44 fixed to wheel well 18. Air gap 46 is defined annularly between heat shield segments 42 and wheel well 18.

Torque bars 24 and heat shield carriers 44 can be secured to wheel 14 using bolts or other fasteners. Torque bar bolts 48 can extend through a hole formed in a flange or other mounting surface on wheel 14. Each torque bar 24 can optionally include at least one torque bar pin 50 at an end opposite torque bar bolts 48, such that torque bar pin 50 can be received through wheel web hole 52 in web 20. Heat shield sections 42 and respective heat shield carriers 44 can then be fastened to wheel well 18 by heat shield fasteners 53.

Under the operating conditions (e.g., high temperature) of aircraft wheel braking assembly 10, carbon-carbon composites may be prone to material loss from oxidation of the carbon. For example, various carbon-carbon composite components of aircraft wheel braking assembly 10 may experience both catalytic oxidation and inherent thermal oxidation caused by heating the composite during operation. In various embodiments, composite rotors 32 and stators 34 may be heated to sufficiently high temperatures that may oxidize the carbon surfaces exposed to air. At elevated temperatures, infiltration of air and contaminants may cause internal oxidation and weakening, especially in and around brake rotor lugs 54 or stator slots 56 securing the friction disks to the respective torque bar 24 and torque take-out assembly 22. Because carbon-carbon composite components of aircraft wheel braking assembly 10 may retain heat for a substantial time period after slowing the aircraft, oxygen from the ambient atmosphere may react with the carbon matrix and/or carbon fibers to accelerate material loss. Further, damage to brake components may be caused by the oxidation enlargement of cracks around fibers or enlargement of cracks in a reaction-formed porous barrier coating (e.g., a silicon-based barrier coating) applied to the carbon-carbon composite.

Elements identified in severely oxidized regions of carbon-carbon composite brake components include potassium (K) and sodium (Na). These alkali contaminants may come into contact with aircraft brakes as part of cleaning or de-icing materials. Other sources include salt deposits left from seawater or sea spray. These and other contaminants (e.g. Ca, Fe, etc.) can penetrate and leave deposits in pores of carbon-carbon composite aircraft brakes, including the substrate and any reaction-formed porous barrier coating. When such contamination occurs, the rate of carbon loss by oxidation can be increased by one to two orders of magnitude.

In various embodiments, components of aircraft wheel braking assembly 10 may reach operating temperatures in the range from about 100° C up to about 900° C. However, it will be recognized that the oxidation protection compositions and methods of the present disclosure may be readily adapted to many parts in this and other braking assemblies, as well as to other carbon-carbon composite structures susceptible to oxidation losses from infiltration of atmospheric oxygen and/or catalytic contaminants.

In various embodiments, a method for limiting an oxidation reaction in a composite structure may comprise forming a slurry, which may be an oxidation protection composition, by combining a pre-slurry composition comprising a first phosphate glass composition in the form of a glass frit, powder, or other suitable pulverized form with a first carrier fluid (such as, for example, water), applying the slurry to a composite structure, and heating the composite structure to a temperature sufficient to dry the carrier fluid and form an oxidation protection composition or coating (or oxidation inhibiting composition) on the composite structure, which in various embodiments may be referred to as a base layer. The slurry, which may be an oxidation protection composition, may comprise additives to increase temperature resistance, to change chemical reactivity, to improve hydrolytic stability, and/or to increase the composite structure's resistance to oxidation, thereby tending to reduce mass loss of composite structure. In various embodiments, the pre-slurry composition of the slurry may comprise one or more additives to increase temperature resistance of the oxidation protection coating. The one or more additives may include carbide, nitride, boron nitride, silicon carbide, titanium carbide, boron carbide, silicon oxycarbide, molybdenum disulfide, tungsten disulfide and/or silicon nitride. In various embodiments, an additive may include molybdenum disulfide ($MoS_2$), tungsten disulfide ($WS_2$), and/or boron nitride (BN). For example, the pre-slurry composition of the slurry may comprise a first additive, such as molybdenum disulfide, tungsten disulfide, and/or boron nitride. The pre-slurry composition of the slurry may further comprise a second additive, such as molybdenum disulfide, tungsten disulfide, and/or boron nitride.

In various embodiments, the pre-slurry composition of the slurry may further comprise additives, such as, for example, ammonium hydroxide, ammonium dihydrogen phosphate, nanoplatelets (such as graphene-based nanoplatelets), among others to improve hydrolytic stability and/or to increase the composite structure's resistance to oxidation. In various embodiments, a slurry may comprise acid aluminum phosphates having an aluminum (Al) to phosphoric acid ($H_3PO_4$) ratio of 1 to 5 or less by weight. In various embodiments, a slurry comprising acid aluminum phosphates having an aluminum (Al) to phosphoric acid ($H_3PO_4$) ratio of 1 to 3 or less by weight, such as an $Al:H_3PO_4$ ratio of between 1 to 2 and 1 to 3 by weight, tends to provide increased hydrolytic stability without substantially increasing composite structure mass loss. In various embodiments, a slurry comprising acid aluminum phosphates having an $Al:H_3PO_4$ ratio between 1:2 to 1:3 produces an increase in hydrolytic protection and an unexpected reduction in composite structure mass loss.

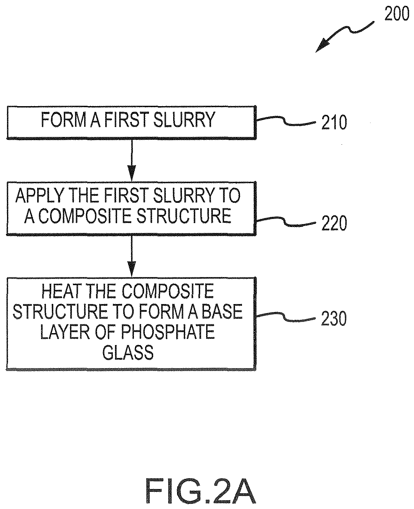

With initial reference to FIG. 2A, a method 200 for coating a composite structure in accordance with various embodiments is illustrated. Method 200 may, for example, comprise applying an oxidation inhibiting composition, or oxidation protection composition, to non-wearing surfaces of carbon-carbon composite brake components. In various embodiments, method 200 may be used on the back face of pressure plate 36 and/or end plate 38, an inner diameter (ID) surface of stators 34 including slots 56, as well as outer diameter (OD) surfaces of rotors 32 including lugs 54. The oxidation protection composition or oxidation inhibiting composition of method 200 may be applied to preselected regions of a carbon-carbon composite structure that may be otherwise susceptible to oxidation. For example, aircraft brake disks may have the oxidation inhibiting composition applied on or proximate stator slots 56 and/or rotor lugs 54.

In various embodiments, method 200 may comprise forming a first slurry 210, which may be an oxidation protection composition, by combining a first phosphate glass composition in the form of a glass frit, powder, or other suitable pulverized and/or ground form with a first carrier fluid (such as, for example, water). In various embodiments, the first phosphate glass composition may be combined with one or more additives to form a first pre-slurry composition. An additive may include carbide, nitride, boron nitride, silicon carbide, titanium carbide, boron carbide, silicon oxycarbide, molybdenum disulfide, tungsten disulfide and/or silicon nitride. For example, the first pre-slurry composition may include a first additive, a second additive and/or a third additive. A first pre-slurry composition comprising a first additive may include molybdenum disulfide, tungsten disulfide or boron nitride. A first pre-slurry composition comprising a first additive and a second additive may include molybdenum disulfide and tungsten disulfide, molybdenum disulfide and boron nitride, or tungsten disulfide and boron nitride. A first pre-slurry composition comprising a first additive, a second additive and a third additive may include molybdenum disulfide, tungsten disulfide and boron nitride.

The first phosphate glass composition of the first slurry is combined with a first additive, which includes a molybdenum disulfide ($MoS_2$) additive and/or a tungsten disulfide ($WS_2$) additive. For example, molybdenum disulfide, such as hexagonal molybdenum disulfide (h-$MoS_2$), may be added to the first phosphate glass composition to form a resulting pre-slurry composition comprising between about 1.0 and 9.0 percent molybdenum disulfide by mass, wherein the term "about" in this context only means +/- 1 percent. The pre-slurry composition may comprise between about 4.0 and 9.0 percent molybdenum disulfide by mass, wherein the term "about" in this context only means +/- 1 percent by mass. Further, the pre-slurry composition may comprise between about 7.0 and 9.0 percent molybdenum disulfide by mass, wherein the term "about" in this context only means +/- 1 percent by mass. Molybdenum disulfide may be prepared for addition to the first phosphate glass composition by, for example, ultrasonically exfoliating molybdenum disulfide in dimethylformamide (DMF), a solution of DMF and water, or 2-propanol solution. In various embodiments, the molybdenum disulfide additive may comprise a molybdenum disulfide that has been prepared for addition to the first phosphate glass composition by crushing or milling (e.g., ball milling) the molybdenum disulfide. The resulting molybdenum disulfide may be combined with the first phosphate glass composition glass frit to form the pre-slurry composition.

The first additive of the pre-slurry composition may comprise a tungsten disulfide additive. For example, tungsten disulfide may be added to the first phosphate glass composition to form a resulting pre-slurry composition comprising between about 0.1 and 9.0 percent tungsten disulfide by mass, wherein the term "about" in this context only means +/- 0.1 percent by mass. The pre-slurry composition may comprise between about 0.25 and 7.5 percent tungsten disulfide by mass, wherein the term "about" in this context only means +/- 0.25 percent by mass. The pre-slurry composition may

EP 3 255 027 B1

comprise between about 4.0 and 9.0 percent tungsten disulfide by mass, wherein the term "about" in this context only means +/- 1 percent by mass. Tungsten disulfide may be prepared for addition to the first phosphate glass composition by, for example, ultrasonically exfoliating tungsten disulfide in DMF, a solution of DMF and water, or 2-propanol solution. In various embodiments, the tungsten disulfide additive may comprise a tungsten disulfide that has been prepared for addition to the first phosphate glass composition by crushing or milling (e.g., ball milling) the tungsten disulfide. The resulting tungsten disulfide may be combined with the first phosphate glass composition glass frit to form the pre-slurry composition.

In various embodiments, the first phosphate glass composition of the first pre-slurry composition may further be combined with a second additive, which includes a boron nitride additive. For example, a boron nitride (such as hexagonal boron nitride) may be added to the pre-slurry composition such that the pre-slurry composition comprises between about 0.1 and 8.0 percent boron nitride by mass, wherein the term "about" in this context only means +/- 0.1 percent by mass. The pre-slurry composition may comprise between about 0.25 and 7.5 percent boron nitride by mass, wherein the term "about" in this context only means +/- 0.25 percent by mass. Further, the pre-slurry composition may comprise between about 0.25 and 4.5 percent boron nitride by mass, wherein the term "about" in this context only means +/- 0.25 percent by mass. In various embodiments, the pre-slurry composition may comprise between about 10 weight percent and about 30 weight percent of boron nitride, wherein the term "about" in this context only means +/- 2 weight percent. Further, the pre-slurry composition may comprise between about 15 weight percent and 25 weight percent of boron nitride, wherein the term "about" in this context only means +/- 2% weight percent. Further, the pre-slurry composition may comprise between about 17 weight percent and 29 weight percent of boron nitride, wherein the term "about" in this context only means +/- 2 weight percent. Boron nitride may be prepared for addition to the first phosphate glass composition by, for example, ultrasonically exfoliating boron nitride in DMF, a solution of DMF and water, or 2-propanol solution. In various embodiments, the boron nitride additive may comprise a boron nitride that has been prepared for addition to the first phosphate glass composition by crushing or milling (e.g., ball milling) the boron nitride. The resulting boron nitride may be combined with the first phosphate glass composition glass frit to form the pre-slurry composition.

In various embodiments, the pre-slurry composition may comprise a first additive and a second additive. The first additive may include molybdenum disulfide and the second additive may include boron nitride. The first additive may include tungsten disulfide and the second additive may include boron nitride. The ratio of the first additive to the second additive, $MoS_2$ or $WS_2$ to BN, is 17:1. In various embodiments, the pre-slurry composition may further comprise a third additive. The first additive may include molybdenum disulfide, the second additive may include boron nitride and the third additive may include tungsten disulfide.

The first phosphate glass composition may comprise one or more alkali metal glass modifiers, one or more glass network modifiers and/or one or more additional glass formers. In various embodiments, boron oxide or a precursor may optionally be combined with the $P_2O_5$ mixture to form a borophosphate glass, which has improved self-healing properties at the operating temperatures typically seen in aircraft braking assemblies. In various embodiments, the phosphate glass and/or borophosphate glass may be characterized by the absence of an oxide of silicon. Further, the ratio of $P_2O_5$ to metal oxide in the fused glass may be in the range from about 0.25 to about 5 by weight.

Potential alkali metal glass modifiers may be selected from oxides of lithium, sodium, potassium, rubidium, cesium, and mixtures thereof. In various embodiments, the glass modifier may be an oxide of lithium, sodium, potassium, or mixtures thereof. These or other glass modifiers may function as fluxing agents. Additional glass formers can include oxides of boron, silicon, sulfur, germanium, arsenic, antimony, and mixtures thereof.

Suitable glass network modifiers include oxides of vanadium, aluminum, tin, titanium, chromium, manganese, iron, cobalt, nickel, copper, mercury, zinc, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof.

The first phosphate glass composition may be prepared by combining the above alkali metal glass modifiers, glass network modifiers, glass formers and/or $P_2O_5$ and heating them to a fusion temperature. In various embodiments, depending on the particular combination of elements, the fusion temperature may be in the range from about 700° C (1292° F) to about 1500° C (2732° F). The resultant melt may then be cooled and pulverized and/or ground to form a glass frit or powder. In various embodiments, the first phosphate glass composition may be annealed to a rigid, friable state prior to being pulverized. Glass transition temperature ($T_g$), glass softening temperature ($T_s$) and glass melting temperature ($T_m$) may be increased by increasing refinement time and/or temperature. Before fusion, the first phosphate glass composition comprises from about 20 mol % to about 80 mol % of $P_2O_5$. In various embodiments, the first phosphate glass composition comprises from about 30 mol % to about 70 mol % $P_2O_5$, or precursor thereof. In various embodiments, the first phosphate glass composition comprises from about 40 to about 60 mol % of $P_2O_5$.

The first phosphate glass composition may comprise from about 5 mol % to about 50 mol % of the alkali metal oxide. In various embodiments, the first phosphate glass composition comprises from about 10 mol % to about 40 mol % of the alkali metal oxide. Further, the first phosphate glass composition comprises from about 15 to about 30 mol % of the alkali metal oxide or one or more precursors thereof. In various embodiments, the first phosphate glass composition may comprise from about 0.5 mol % to about 50 mol % of one or more of the above-indicated glass formers. The first phosphate glass composition may comprise about 5 to about 20 mol % by weight of one or more of the above-indicated glass formers. As used herein, mol % is defined as the number of moles of a constituent per the total moles of the solution.

In various embodiments, the first phosphate glass composition can comprise from about 0.5 mol % to about 40 mol % of one or more of the above-indicated glass network modifiers. The first phosphate glass composition may comprise from about 2.0 mol % to about 25 mol % of one or more of the above-indicated glass network modifiers.

In various embodiments, the first phosphate glass composition may represented by the formula:

$$a(A'_2O)_x(P_2O_5)_{y1}b(G_fO)_{y2}c(A''O)_z \qquad [1]$$

In Formula 1, A' is selected from: lithium, sodium, potassium, rubidium, cesium, and mixtures thereof; $G_f$ is selected from: boron, silicon, sulfur, germanium, arsenic, antimony, and mixtures thereof; A'' is selected from: vanadium, aluminum, tin, titanium, chromium, manganese, iron, cobalt, nickel, copper, mercury, zinc, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof; a is a number in the range from 1 to 5; b is a number in the range from 0 to 10; c is a number in the range from 0 to 30; x is a number in the range from 0.050 to 0.500; $y_1$ is a number in the range from 0.100 to 0.950; $y_2$ is a number in the range from 0 to 0.20; and z is a number in the range from 0.01 to 0.5; $(x + y_1 + y_2 + z)=1$; and $x < (y_1 + y_2)$. The first phosphate glass composition may be formulated to balance the reactivity, durability and flow of the resulting glass barrier layer for optimal performance.

In various embodiments, the first phosphate glass composition in glass frit form may be combined with additional components to form the first pre-slurry composition. For example, crushed first phosphate glass composition in glass frit form may be combined with ammonium hydroxide, ammonium dihydrogen phosphate, nanoplatelets (such as graphene-based nanoplatelets), among others. For example, graphene nanoplatelets could be added to the first phosphate glass composition in glass frit form. In various embodiments, the additional components may be combined and preprocessed before combining them with first phosphate glass composition in glass frit form. Other suitable additional components include, for example, surfactants such as, for example, an ethoxylated low-foam wetting agent and flow modifiers, such as, for example, polyvinyl alcohol, polyacrylate, or similar polymers. In various embodiments, other suitable additional components may include additives to enhance impact resistance and/or to toughen the oxidation protection coating, such as, for example, at least one of whiskers, nanofibers or nanotubes consisting of nitrides, carbides, carbon, graphite, quartz, silicates, aluminosilicates, phosphates, and the like. In various embodiments, additives to increase temperature resistance, to change chemical reactivity, enhance impact resistance and/or to toughen the oxidation protection coating may include silicon carbide whiskers, carbon nanofibers, molybdenum disulfide nanoplatelets, tungsten disulfide, boron nitride nanotubes and similar materials.

In various embodiments, the first pre-slurry composition may be combined with a first carrier fluid to form the first slurry. The first carrier fluid of the first slurry may comprise an acid aluminum phosphate wherein the ratio of $Al:H_3PO_4$ may be between 1:2 to 1:5, between 1:2 to 1:3, between 1:3 to 1:5, between 1:2.2 to 1:3, between 1:2.5 to 1:3, between 1:2.7 to 1:3 or between 1:29 to 1:3, as measured by weight.

Method 200 further comprises applying the first slurry to a composite structure 220. Applying the first slurry may comprise, for example, spraying or brushing the first slurry of the first phosphate glass composition on to an outer surface of the composite structure. Any suitable manner of applying the base layer to the composite structure is within the scope of the present disclosure. As referenced herein, the composite structure may refer to a carbon-carbon composite structure.

Method 200 further comprises a step 230 of heating the composite structure to form a base layer of phosphate glass. The composite structure may be heated (e.g., dried or baked) at a temperature in the range from about 150° C (302° F) to about 1000° C (1832° F). In various embodiments, the composite structure is heated to a temperature in a range from about 600° C (1112° F) to about 1000° C (1832° F), or between about 150° C (302° F) to about 900° C (1652° F), or further, between about 400° C (752° F) to about 850° C (1562° F). Step 230 may, for example, comprise heating the composite structure for a period between about 0.5 hour and about 8 hours, wherein the term "about" in this context only means +/- 0.25 hours. The base layer may also be referred to as a coating.

In various embodiments, the composite structure may be heated to a first, lower temperature (for example, about 30° C (86° F) to about 400° C (752° F)) to bake or dry the base layer at a controlled depth. A second, higher temperature (for example, about 300° C (572° F) to about 1000° C (1832° F)) may then be used to form a deposit from the base layer within the pores of the composite structure. The duration of each heating step can be determined as a fraction of the overall heating time and can range from about 10% to about 50%, wherein the term "about" in this context only means +/- 5%. In various embodiments, the duration of the lower temperature heating step(s) can range from about 20% to about 40% of the overall heating time, wherein the term "about" in this context only means +/- 5%. The lower temperature step(s) may occupy a larger fraction of the overall heating time, for example, to provide relatively slow heating up to and through the first lower temperature. The exact heating profile will depend on a combination of the first temperature and desired depth of the drying portion.

Step 230 may be performed in an inert environment, such as under a blanket of inert gas or less reactive gas (e.g., nitrogen, argon, other noble gases and the like). For example, a composite structure may be pretreated or warmed prior to application of the base layer to aid in the penetration of the base layer. Step 230 may be for a period of about 2 hours at a temperature of about 600°C (1112° F) to about 800°C (1472° F), wherein the term "about" in this context only means +/- 10°C. The composite structure and base layer may then be dried or baked in a non-oxidizing, inert or less reactive atmosphere, e.g., noble gasses and/or nitrogen ($N_2$), to optimize the retention of the first pre-slurry composition of the base layer in the pores of the composite structure. This retention may, for example, be improved by heating the composite structure to about 200°C (392° F) and maintaining the temperature for about 1 hour before heating the carbon-carbon composite to a temperature in the range described above. The temperature rise may be controlled at a rate that removes water without boiling, and provides temperature uniformity throughout the composite structure.

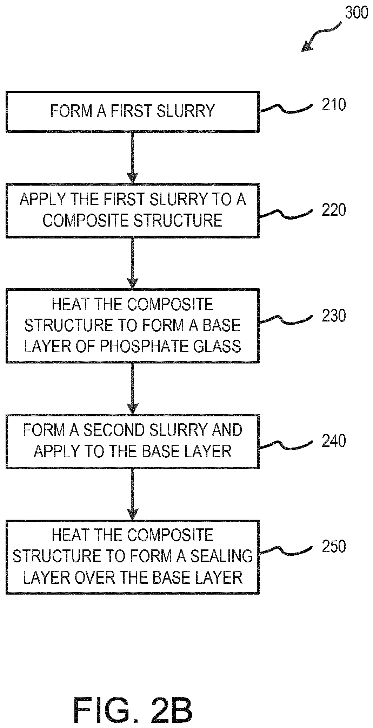

With reference now to FIG. 2B, a method 300 for coating a composite structure in accordance with various embodiments is illustrated. Method 300 may, for example, comprise applying an oxidation inhibiting composition or oxidation protection composition to non-wearing surfaces of carbon-carbon composite brake components. Method 300, which comprises steps also found in method 200, may further comprise a step 240, similar to step 210, of forming a second slurry by combining a second pre-slurry composition, which may comprise a second phosphate glass composition in glass frit or powder form with a second carrier fluid (such as, for example, water). In various embodiments, the second slurry may comprise an acid aluminum phosphate wherein the ratio of aluminum (Al) to phosphoric acid ($H_3PO_4$) may be between 1:2 to 1:5, between 1:2 to 1:3, between 1:3 to 1:5, between 1:2.2 to 1:3, between 1:2.5 to 1:3, between 1:2.7 to 1:3 or between 1:29 to 1:3. Step 240 further comprises, similar to step 220, applying the second slurry to the base layer. Step 240 may comprise spraying or brushing the second slurry of the second phosphate glass composition on to an outer surface of the base layer. Any suitable manner of applying the sealing layer to the base layer is within the scope of the present disclosure.

In various embodiments, the second slurry may be substantially free of molybdenum disulfide, tungsten disulfide and boron nitride. The second slurry may be substantially free of carbide, nitride, boron nitride, silicon carbide, titanium carbide, boron carbide, silicon oxycarbide, molybdenum disulfide, tungsten disulfide, and silicon nitride. In this case, "substantially free" means less than 0.01 percent by weight. For example, the second pre-slurry composition may comprise any of the glass compositions described in connection with the first phosphate glass composition, without the addition of a molybdenum disulfide additive, without the addition of a tungsten disulfide additive and without the addition of a boron nitride additive. In various embodiments, the second pre-slurry composition may comprise the same pre-slurry composition and/or phosphate glass composition used to prepare the first pre-slurry composition and/or first phosphate glass composition. In various embodiments, the second pre-slurry composition may comprise a different pre-slurry composition and/or phosphate glass composition than the first pre-slurry composition and/or first phosphate glass composition.

In various embodiments, the first slurry and the second slurry may be formulated to balance the durability, temperature resistance, chemical resistance, impact resistance, and self-healing properties of the oxidation protection coating on the composite structure. The first pre-slurry composition or first slurry may comprise additives to increase temperature resistance, while the second pre-slurry composition or second slurry may be formulated to improve the impact resistance and self-healing properties of the oxidation protection coating. The oxidation protection coating comprising the first and second pre-slurry compositions or slurries may have both increased temperature resistance and self-healing properties, thereby increasing the oxidation protection capability of the coating and reducing mass loss of composite structures at higher temperatures.

Method 300 comprises a step 250 of heating the composite structure to form a sealing layer of phosphate glass over the base layer. Similar to step 230, the composite structure may be heated at a temperature sufficient to adhere the sealing layer to the base layer by, for example, drying or baking the carbon-carbon composite structure at a temperature in the range from about 200° C (392° F) to about 1000° C (1832° F). In various embodiments, the composite structure is heated to a temperature in a range from about 650° C (1202° F) to about 900° C (1652° F), or between about 200° C (392° F) to about 900° C (1652° F), or further, between about 400° C (752° F) to about 850° C (1562° F), wherein in this context only, the term "about" means +/- 10° C. Further, step 250 may, for example, comprise heating the composite structure for a period between about 0.5 hour and about 8 hours, where the term "about" in this context only means +/- 0.25 hours.

In various embodiments, step 250 may comprise heating the composite structure to a first, lower temperature (for example, about 30°C (86°F) to about 300°C (572°F)) followed by heating at a second, higher temperature (for example, about 300°C (572°F) to about 1000°C (1832°F)). Further, step 250 may be performed in an inert environment, such as under a blanket of inert or less reactive gas (e.g., nitrogen, argon, other noble gases, and the like).

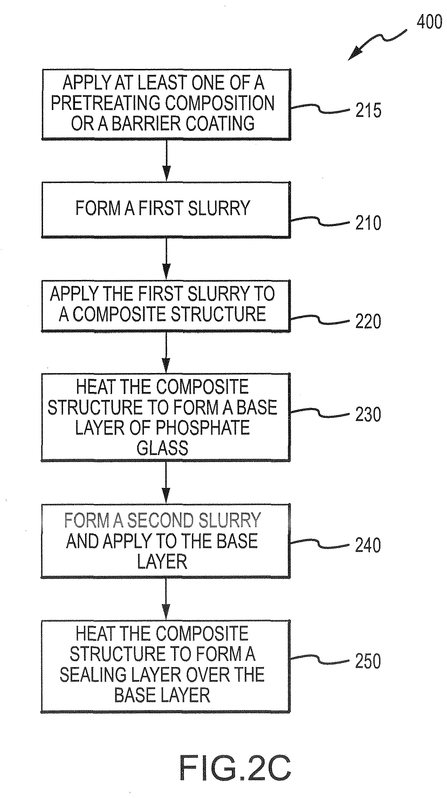

In various embodiments and with reference now to FIG. 2C, method 400, which comprises steps also found in method 300, comprises applying at least one of a pretreating composition or a barrier coating 215 prior to applying the first slurry. Pretreatment step 215 may, for example, comprise applying a first pretreating composition to an outer surface of a composite structure, such as a component of aircraft wheel braking assembly 10. In various embodiments, the first pretreating composition comprises an aluminum oxide in water. For example, the aluminum oxide may comprise an additive, such as a nanoparticle dispersion of aluminum oxide (for example, NanoBYK-3600®, sold by BYK Additives & Instruments). The first pretreating composition may further comprise a surfactant or a wetting agent. The composite structure may be porous, allowing the pretreating composition to penetrate at least a portion of the pores of the composite structure.

In various embodiments, after applying the first pretreating composition, the component is heated to remove water and fix the aluminum oxide in place. For example, the component may be heated between about 100°C (212°F) and 200°C, and further, between 100°C (212°F) and 150 °C (392°F).

Pretreatment step 215 may further comprise applying a second pretreating composition. In various embodiments, the second pretreating composition comprises a phosphoric acid and an aluminum phosphate, aluminum hydroxide, or aluminum oxide. The second pretreating composition may further comprise, for example, a second metal salt such as a magnesium salt. In various embodiments, the aluminum to phosphorus ratio of the aluminum phosphate is 1 to 5 or less by weight. Further, the second pretreating composition may also comprise a surfactant or a wetting agent. In various embodiments, the second pretreating composition is applied to the composite structure atop the first pretreating composition. The composite structure may then, for example, be heated. In various embodiments, the composite structure may be heated between about 600 °C (1112 °F) and about 800 °C (1472 °F), and further, between about 650 °C (1202 °F) and 750 °C (1382 °F).

Pretreatment step 215 may further comprise applying a barrier coating to an outer surface of a composite structure, such as a component of aircraft wheel braking assembly 10. In various embodiments the barrier coating composition may comprise carbides or nitrides, including at least one of a molybdenum disulfide, tungsten disulfide, boron nitride, silicon carbide, titanium carbide, boron carbide, silicon oxycarbide, and silicon nitride. In various embodiments, the barrier coating may be formed by treating the composite structure with molten silicon. The molten silicon is reactive and may form a silicon carbide barrier on the composite structure. Step 215 may comprise, for example, application of the barrier coating by spraying, chemical vapor deposition (CVD), molten application, or brushing the barrier coating composition on to the outer surface of the carbon-carbon composite structure. Any suitable manner of applying the base layer to composite structure is within the scope of the present disclosure.

TABLES 1 and 2 illustrates a variety of pre-slurry compositions, including phosphate glass compositions, in accordance with various embodiments.

TABLE 1

| | Pre-slurry Composition | | | | | |
|---|---|---|---|---|---|---|
| | **A** | **B** | **C** | **D** | **E** | **F** |
| **Wt% Glass** | 75.01 | 75.01 | 76.71 | 69.74 | 80.20 | 73.22 |
| **Wt % Boron Nitride** | 0 | 0 | 21.07 | 28.09 | 17.53 | 24.54 |
| **Wt % o-AlPO4** | 0 | 2.27 | 0 | 0 | 0 | 0 |

TABLE 2

| | Pre-slurry Composition | | | | | | | |
|---|---|---|---|---|---|---|---|---|
| | **H** | **J** | **K** | **L** | **M** | **N** | **P** | **Q** |
| **% Glass** | 35.21 | 35.21 | 35.21 | 35.21 | 35.21 | 35.21 | 35.21 | 35.21 |
| **% Boron Nitride** | 0.49 | 4.33 | 7.17 | 0 | 0 | 4.33 | 0 | $\%X_{BN}$ |
| **% Molybdenum Disulfide** | 8.16 | 4.33 | 1.48 | 8.65 | 0 | 0 | 4.33 | $\%Y_{MoS}$ |
| **% Tungsten Disulfide** | 0 | 0 | 0 | 0 | 8.65 | 4.33 | 4.33 | $\%Z_{WS}$ |

Pre-slurry compositions A and B comprise phosphate glass compositions free of molybdenum disulfide, tungsten disulfide, and boron nitride. For example, compositions A and B may be suitable sealing layers, such as the sealing layer applied in step 240 of methods 300 and 400. Pre-slurry compositions C, D, E, F, H, J, K, L, M, N, P and Q comprise phosphate glass and boron nitride and/or molybdenum disulfide additives. For example, pre-slurry compositions H, J, K, L, M, N, P and Q may illustrate suitable base layers, such as base layers applied in step 220 of methods 200, 300, and 400. As illustrated in TABLE 1, the boron nitride content of pre-slurry compositions C, D, E, and F varies between about 17.53 and 28.09 weight percent boron nitride. Molybdenum disulfide or tungsten disulfide may be substituted for boron nitride in pre-slurry compositions C, D, E, and F. As illustrated in TABLE 2, the boron nitride content of pre-slurry compositions H, J, K, L, and N varies between about 0 and 7.17 percent boron nitride by mass. As illustrated in TABLE 2, the molybdenum disulfide content of pre-slurry compositions H, J, K, L and P varies between about 1.48 and 8.65 percent molybdenum disulfide by mass. As illustrated in TABLE 2, the tungsten disulfide content of pre-slurry compositions M, N and P varies between about 4.33 and 8.65 percent tungsten disulfide by mass. Pre-slurry composition Q represents a pre-slurry composition which may include one or more additives, such as of molybdenum disulfide, tungsten disulfide and/or boron nitride. In various embodiments, a mass percent of additives in the first pre-slurry composition may represented by the formula:

$$\%Y_{MoS} + \%Z_{WS} + \%X_{BN} \; [2]$$

In Formula [2], a mass percent of molybdenum disulfide, shown by $\%Y_{MoS}$, may range from 0 to 8.65. A mass percent of tungsten disulfide, shown by $\%Z_{WS}$, may range from 0 to 8.65. A mass percent of boron nitride, shown by $\%X_{BN}$, may range from 0 to 8.65.

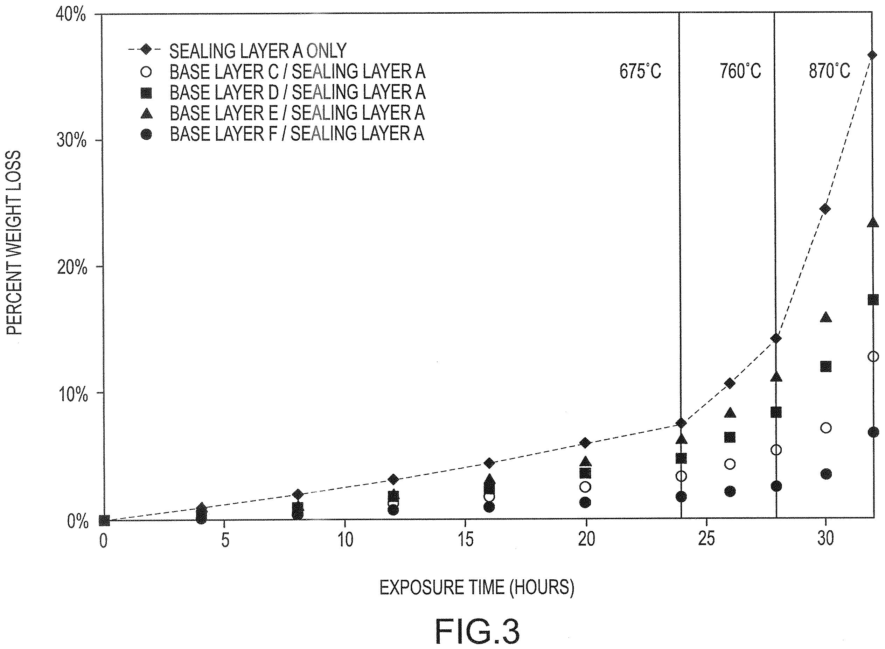

With reference to FIG. 3 and TABLE 3 (below), experimental data obtained from testing various glass compositions in accordance with various embodiments is illustrated.

TABLE 3

| Base Layer | | (none) | E | D | C | F |
|---|---|---|---|---|---|---|
| Sealing Layer | | A | A | A | A | A |
| Oxidation Temp | Exposure Time (Hours) | Percentage Weight Loss | | | | |
| 675 Degrees C | 0 | 0.00 | 0.00 | 0.00 | 0.00 | 0.00 |
| | 4 | 0.90 | 0.32 | 0.41 | 0.44 | 0.18 |
| | 8 | 1.98 | 0.70 | 1.01 | 1.07 | 0.39 |
| | 12 | 3.13 | 1.19 | 1.76 | 1.95 | 0.64 |
| | 16 | 4.41 | 1.80 | 2.56 | 2.98 | 0.95 |
| | 20 | 5.94 | 2.52 | 3.56 | 4.65 | 1.31 |
| | 24 | 7.48 | 3.41 | 4.73 | 6.29 | 1.76 |
| 760 Degrees C | 26 | 10.63 | 4.31 | 6.43 | 8.47 | 2.11 |
| | 28 | 14.28 | 5.40 | 8.37 | 11.13 | 2.54 |
| 870 Degrees C | 30 | 24.43 | 7.18 | 11.96 | 15.95 | 3.50 |
| | 32 | 36.45 | 12.76 | 17.27 | 23.43 | 6.89 |

The base layers and sealing layers shown in TABLE 3 are the same as shown in TABLE 1, with like labeling A, B, C, D, E and F. A base layer of formed of phosphate glass in compositions C, D, E, F, H, J, K, L, M, N, P and/or Q comprising molybdenum disulfide, tungsten disulfide and/or boron nitride are applied as slurry (i.e. a first slurry of a first phosphate glass composition) to a composite structure. Compositions A, B, C, D, E, F, H, J, K, L, M, N, P and/or Q may be oxidation protection compositions. A sealing layer formed of composition A and/or B is applied over the base layer (i.e. a second slurry of a second phosphate glass composition). As illustrated in TABLE 3, a sealing layer formed of composition A is applied over a base layer of phosphate glass formed of compositions C, D, E and F. As shown, the composite structure having the base layer exhibited a lower weight loss to oxidation at temperatures at and above 675° C (1250° F) than composite structures having layer A by itself. FIG. 3 illustrates the data from TABLE 3, with percent weight loss on the y axis and exposure time in hours on the x axis. Examples of table 3 and figure 3 do not fall within the scope of the claims.

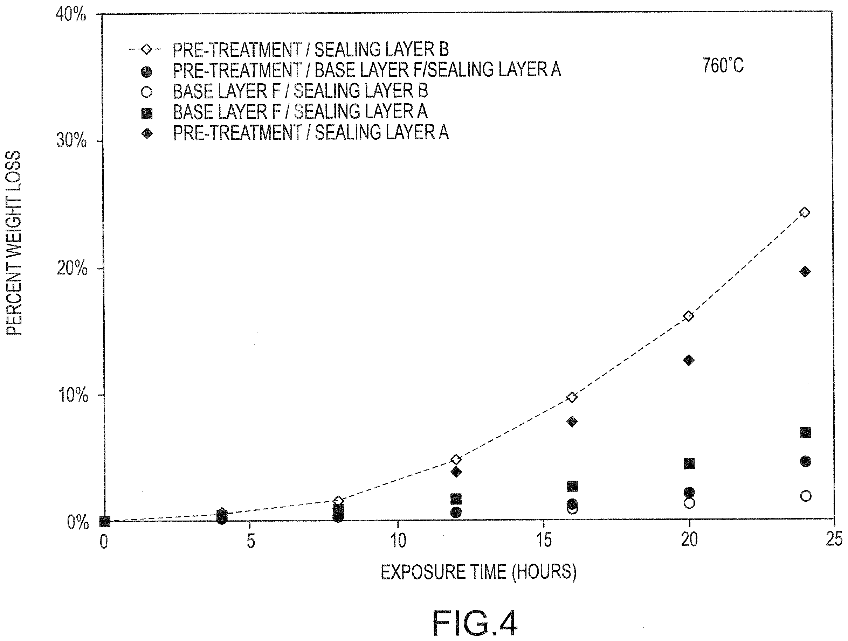

With reference to FIG. 4, a number of combinations are illustrated, including various combinations of pre-treatment (such as, for example, as may be performed by pretreatment step 215), base layers, and sealing layers. The base layer and sealing layers are shown in FIG. 4 with the same labeling as shown in TABLE 1, A through F. For example, FIG. 4 illustrates that the performance of a composition comprising a base layer of glass composition F and a sealing layer B provides improved oxidation protection over a pretreated composite structure having only sealing layer B. Other combinations include a base layer of glass composition F and a sealing layer A (without pre-treatment), a pretreatment with sealing layer A only, a base layer of F with a sealing layer of A (with pre-treatment).

TABLES 4 and 5 illustrate a variety of slurries comprising pre-slurry compositions, including phosphate glass compositions, prepared in accordance with various embodiments. Examples A, Bl, B2, C, D, E, F and G from Table 4 do not fall within the scope of the first slurry of the claims.

TABLE 4

| Example >> | A | B1 | B2 | C | D | E | F | G |
|---|---|---|---|---|---|---|---|---|
| *h*-Boron nitride (*h*-BN) powder A | 0 | 0 | 0 | 8.75 | 8.75 | 8.25 | 8.25 | 8.25 |
| *h*-Boron nitride (*h*-BN) powder B | 0 | 0 | 0 | 0 | 0 | 0.50 | 0.50 | 0.50 |
| *h*-molybdenum disulfide (*h*-MoS$_2$) | 0 | 0 | 0 | 0 | 0 | 0 | 0 | 0 |
| Graphene nanoplatelets | 0 | 0 | 0 | 0.15 | 0.15 | 0.15 | 0.15 | 0.15 |
| H$_2$O | 52.40 | 52.40 | 52.40 | 50.00 | 50.00 | 45.00 | 45.00 | 60.00 |
| Surfynol 465 surfactant | 0 | 0 | 0 | 0.20 | 0.20 | 0.20 | 0.20 | 0.20 |
| Ammonium dihydrogen phosphate (ADHP) | 11.33 | 11.33 | 1.00 | 0 | 0 | 0 | 0 | 0.50 |
| NH$_4$OH | 0 | 0 | 0 | 0.50 | 0 | 0.50 | 0.50 | 0 |
| Glass frit | 34.00 | 34.00 | 34.00 | 26.50 | 26.50 | 26.50 | 26.50 | 26.50 |
| Acid aluminum phosphate (1:3 Al-P) | 0 | 0 | 0 | 0 | 0 | 10.00 | 0 | 0 |
| Acid aluminum phosphate (1:2.5 Al-P) | 0 | 0 | 10.00 | 0 | 0 | 0 | 0 | 5.00 |
| Acid aluminum phosphate (1:2 Al-P) | 0 | 0 | 0 | 0 | 0 | 0 | 10.00 | 0 |
| Ammonium dihydrogen phosphate (ADHP) | 0 | 0 | 0 | 0 | 0.50 | 0 | 0 | 0 |
| Aluminum orthophosphate (o-AlPO$_4$) | 0 | 2.270 | 2.270 | 0 | 0 | 0 | 0 | 0 |

TABLE 5

| Example>> | H | J | K | L | M | N | P | Q |
|---|---|---|---|---|---|---|---|---|
| *h*-Boron nitride (*h*-BN) powder | 0.50 | 4.375 | 7.25 | 0 | 0 | 4.375 | 0 | X$_{BN}$ |
| *h*-Molybdenum disulfide (*h*-MoS$_2$) | 8.25 | 4.375 | 1.50 | 8.75 | 0 | 0 | 4.375 | Y$_{MoS}$ |
| Tungsten disulfide (WS$_2$) | 0 | 0 | 0 | 0 | 8.75 | 4.375 | 4.375 | Z$_{WS}$ |
| Graphene nanoplatelets | 0.15 | 0.15 | 0.15 | 0.15 | 0.15 | 0.15 | 0.15 | 0.15 |
| H$_2$O | 60.00 | 60.00 | 60.00 | 60.00 | 60.00 | 60.00 | 60.00 | 60.00 |
| Surfynol 465 surfactant | 0.20 | 0.20 | 0.20 | 0.20 | 0.20 | 0.20 | 0.20 | 0.20 |
| Ammonium dihydrogen phosphate (ADHP) | 0 | 0 | 0 | 0 | 0 | 0 | 0 | 0 |
| NH$_4$OH | 0.50 | 0.50 | 0.50 | 0.50 | 0.50 | 0.50 | 0.50 | 0.50 |
| Glass frit | 26.50 | 26.50 | 26.50 | 26.50 | 26.50 | 26.50 | 26.50 | 26.50 |
| Acid aluminum phosphate (1:3 Al-P) | 0 | 0 | 0 | 0 | 0 | 0 | 0 | 0 |
| Acid aluminum phosphate (1:2.5 Al-P) | 5.00 | 5.00 | 5.00 | 5.00 | 5.00 | 5.00 | 5.00 | 5.00 |
| Acid aluminum phosphate (1:2 Al-P) | 0 | 0 | 0 | 0 | 0 | 0 | 0 | 0 |
| Ammonium dihydrogen phosphate (ADHP) | 0 | 0 | 0 | 0 | 0 | 0 | 0 | 0 |
| Aluminum orthophosphate (o-AlPO$_4$) | 0 | 0 | 0 | 0 | 0 | 0 | 0 | 0 |

TABLE 6 illustrates a variety of aluminum phosphate solutions in accordance with various embodiments.

TABLE 6

| Acid aluminum phosphate solutions | | | | | | |
|---|---|---|---|---|---|---|
| | | AIPO 1:4 | AIPO 1:3.5 | AIPO 1:3 | AIPO 1:2.5 | AIPO 1:2 |
| Component | MW | Amount (grams) | | | | |
| H$_2$O | 18.01 | 60.10 | 60.65 | 61.42 | 62.50 | 64.08 |
| H$_3$PO$_4$ (85%) | 98.00 | 100.00 | 100.00 | 100.00 | 100.00 | 100.00 |
| Al(OH)$_3$ | 78.00 | 19.90 | 22.74 | 26.53 | 31.85 | 39.80 |
| | | Al:P | | | | |
| | | 0.250 | 0.286 | 0.333 | 0.400 | 0.500 |

As illustrated in TABLES 4, 5, and 6, oxidation protection system slurries comprising a phosphate glass composition glass frit in a carrier fluid (i.e., water) and various additives including *h*-molybdenum disulfide, *h*-boron nitride, graphene nanoplatelets, a surfactant, a flow modifier such as, for example, polyvinyl alcohol, polyacrylate or similar polymer, ammonium dihydrogen phosphate, ammonium hydroxide, and acid aluminum phosphates with $Al:H_3PO_4$ ratios of between 1 to 2 and 1 to 5 by weight were prepared. Such as, for example, slurry example G contained *h*-boron nitride, graphene nanoplatelets, and an acid aluminum phosphate solution with an aluminum to phosphorus ratio of 1:2.5 (see TABLE 4). As a further example, slurry example H contained h-molybdenum disulfide, *h*-boron nitride, graphene nanoplatelets, and an acid aluminum phosphate solution with an aluminum to phosphorus ratio of 1:2.5. As a further example, slurry example L contained *h*-molybdenum disulfide, graphene nanoplatelets, and an acid aluminum phosphate solution with an aluminum to phosphorus ratio of 1:2.5. As a further example, slurry example Q represents a composition which may include one or more additives, such as of molybdenum disulfide, tungsten disulfide and/or boron nitride. In various embodiments, a quantity or mass (in grams) of the one or more additives in the first pre-slurry composition may represented by the formula:

$$Y_{MoS} + Z_{WS} + X_{BN}\ [3]$$

In Formula [3], a mass of molybdenum disulfide, shown by $Y_{MoS}$, may range from 0 to 8.75. A mass of tungsten disulfide, shown by $Z_{WS}$, may range from 0 to 8.75. A mass of boron nitride, shown by $X_{BN}$, may range from 0 to 8.75.

The slurries (examples C, D, E, F, G, H, J, K, L, M, N, and P) were applied to 50 gram carbon-carbon composite structure coupons and cured in inert atmosphere under heat at 899° C (1650° F). After cooling, glazes (examples A, B1 or B2) were applied atop the cured layer and the coupons were fired again in an inert atmosphere. A control coupon was pretreated with an alumina nanoparticle and given an acid aluminum phosphate base layer with a $Al:H_3PO_4$ ratio of about 1 to 3.0, as described in various embodiments, and cured under an inert atmosphere. A control glaze was prepared as a slurry comprising a phosphate glass composition, water, ammonium dihydrogen phosphate, and aluminum orthophosphate. The control glaze (example B1) was applied atop the cured pretreated control and then fired again under an inert atmosphere forming, for example, a base layer. After cooling, the coupons were subjected to isothermal oxidation testing a 760°C (1400°F) over a period of 24 hours while monitoring mass loss. The composite structures formed from the slurries of C, D, E, F, and G do not fall within the scope of the claims.

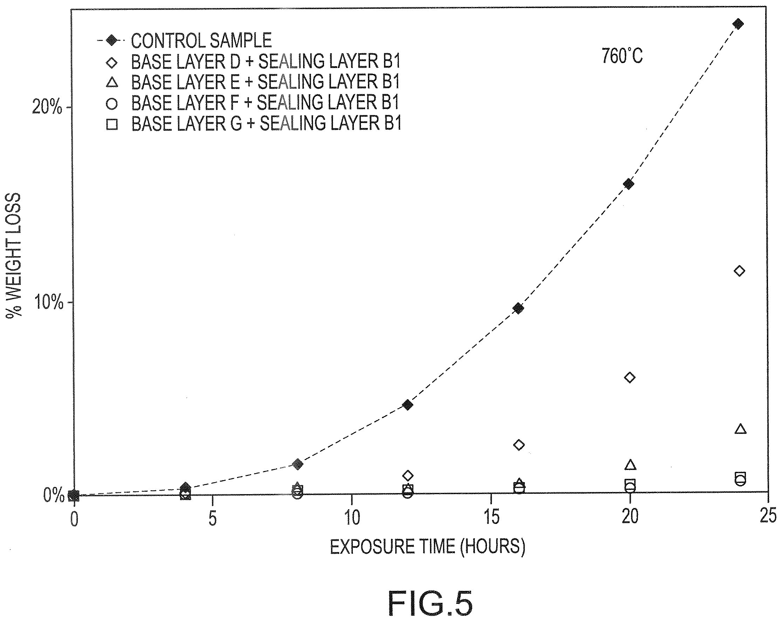

With reference to TABLE 4 and FIG. 5, the performance of the coatings applied according to various embodiments is illustrated in comparison with a control. The control includes a pretreated composite structure having only base layer B. Percent weight loss is shown in the y axis and exposure time is shown in the x axis. Against the control, the addition of an acid aluminum phosphate with ratio of $Al:H_3PO_4$ of between 1:2 and 1:3 reduces mass losses due to oxidation by between two times to over ten times (i.e., an order of magnitude). After 24 hours at 760°C (1400°F) the control had lost 24.1% of its mass in comparison the best performing test sample which had lost only 0.7% of its mass. The combined effect of adding acid aluminum phosphate into the slurry wherein the ratio of $Al:H_3PO_4$ is between about 1:2 and 1:3 provides an unexpected increase in protection over standalone pretreatment of the carbon-carbon composite structure followed by application of a base layer or a base layer and sealing layer. Without being bound by theory, it is thought that the addition of acid aluminum phosphate wherein the ratio of $Al:H_3PO_4$ is between about 1:2 and 1:3 produces a base layer which is both cohesive and adhesive.

With reference to TABLE 5, the performance of the coatings applied according to various embodiments H, J, and K was tested as described above. After 24 hours at 760°C (1400°F) the test sample including base layer H had lost 2.84% of its mass, the test sample including base layer J had lost greater than 50% of its mass, and the test sample including base layer K had lost greater than 50% of its mass. Samples J, K, L, M, N, P and Q do not fall within the scope of the claims.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1.  A method for coating a carbon-carbon composite structure, comprising:

    applying a first slurry of a first phosphate glass composition on an outer surface of the composite structure, wherein the first slurry comprises a first additive including at least one of molybdenum disulfide or tungsten disulfide and a second additive including boron nitride; and
    heating the composite structure to a temperature sufficient to form a base layer adhered to the composite structure,
    **characterized in that** the ratio of the first additive to the second additive is 17:1.

2.  The method of claim 1, further comprising forming a first pre-slurry composition by combining the first additive with a first glass frit comprising the first phosphate glass composition.

3.  The method of claim 2, wherein the method further comprises forming the first slurry by combining the first pre-slurry composition with a first carrier fluid, wherein the first carrier fluid comprises an acid aluminum phosphate.

4.  The method of any preceding claim, further comprising:

    applying a second slurry of a second phosphate glass composition to the base layer; and
    heating the composite structure to a temperature sufficient to form sealing layer adhered to the base layer.

5.  The method of claim 4, wherein the second slurry is free of molybdenum disulfide, tungsten disulfide and boron nitride.

6.  The method of any preceding claim, wherein the first phosphate glass composition is represented by the formula $a(A'_2O)_x(P_2O_5)_{y1}b(G_fO)_{y2}c(A''O)_z$:

    A' is selected from: lithium, sodium, potassium, rubidium, cesium, and mixtures thereof;
    $G_f$ is selected from: boron, silicon, sulfur, germanium, arsenic, antimony, and mixtures thereof;
    A'' is selected from: vanadium, aluminum, tin, titanium, chromium, manganese, iron, cobalt, nickel, copper, mercury, zinc, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
    a is a number in the range from 1 to 5;
    b is a number in the range from 0 to 10;
    c is a number in the range from 0 to 30;
    x is a number in the range from 0.050 to 0.500;
    $y_1$ is a number in the range from 0.100 to 0.950;
    $y_2$ is a number in the range from 0 to 0.20; and
    z is a number in the range from 0.01 to 0.5;

$$(x + y_1 + y_2 + z) = 1;$$

and

$$x < (y_1 + y_2).$$

7. An article comprising:

a carbon-carbon composite structure; and
an oxidation protection composition including a base layer disposed on an outer surface of the composite structure, wherein the base layer comprises a first phosphate glass composition having a first additive dispersed throughout the base layer, the first additive including at least one of molybdenum disulfide or tungsten disulfide, and wherein the base layer further comprises a second additive including boron nitride, **characterized in that** a ratio of the first additive to the second additive is 17:1.

8. The article of claim 7, further comprising a sealing layer disposed on an outer surface of the base layer, wherein the sealing layer comprises a second phosphate glass composition and wherein the sealing layer is free of boron nitride, molybdenum disulfide and tungsten disulfide.

9. An oxidation protection composition, comprising:

a first phosphate glass composition having a first additive including at least one of molybdenum disulfide or tungsten disulfide and a second additive including boron nitride; and
a first carrier fluid,
**characterized in that** the ratio of the first additive to the second additive is 17:1.

10. The oxidation protection composition of claim 9, wherein the first carrier fluid comprises an acid aluminum phosphate, and/or wherein the first phosphate glass composition is represented by the formula $a(A'_2O)_x(P_2O_5)_{y_1}b(G_fO)_{y_2}c(A"O)_z$:

A' is selected from: lithium, sodium, potassium, rubidium, cesium, and mixtures thereof;
$G_f$ is selected from: boron, silicon, sulfur, germanium, arsenic, antimony, and mixtures thereof;
A" is selected from: vanadium, aluminum, tin, titanium, chromium, manganese, iron, cobalt, nickel, copper, mercury, zinc, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;
a is a number in the range from 1 to 5;
b is a number in the range from 0 to 10;
c is a number in the range from 0 to 30;
x is a number in the range from 0.050 to 0.500;
$y_1$ is a number in the range from 0.100 to 0.950;
$y_2$ is a number in the range from 0 to 0.20; and
z is a number in the range from 0.01 to 0.5;

$$(x + y_1 + y_2 + z)=1;$$

and

$$x < (y_1 + y_2).$$

**Patentansprüche**

1. Verfahren zum Beschichten einer Kohlenstoff-Kohlenstoff-Verbundwerkstoffstruktur, umfassend:

Auftragen einer ersten Aufschlämmung einer ersten Phosphatglaszusammensetzung auf einer Außenfläche der Verbundwerkstoffstruktur, wobei die erste Aufschlämmung einen ersten Zusatzstoff, der zumindest eines von Molybdändisulfid oder Wolframdisulfid beinhaltet, und einen zweiten Zusatzstoff, der Bornitrid beinhaltet, umfasst; und

Erwärmen der Verbundwerkstoffstruktur auf eine Temperatur, die ausreichend ist, um eine Basisschicht zu bilden, die an der Verbundwerkstoffstruktur anhaftet,

**dadurch gekennzeichnet, dass** das Verhältnis des ersten Zusatzstoffes zu dem zweiten Zusatzstoff 17:1 ist.

2. Verfahren nach Anspruch 1, ferner umfassend das Bilden einer ersten Voraufschlämmungszusammensetzung durch Kombinieren des ersten Zusatzstoffes mit einer ersten Glasfritte, die die erste Phosphatglaszusammensetzung umfasst.

3. Verfahren nach Anspruch 2, wobei das Verfahren ferner das Bilden der ersten Aufschlämmung durch Kombinieren der ersten Voraufschlämmungszusammensetzung mit einem ersten Trägerfluid umfasst, wobei das erste Trägerfluid ein saures Aluminiumphosphat umfasst.

4. Verfahren nach einem vorhergehenden Anspruch, ferner umfassend:

Auftragen einer zweiten Aufschlämmung einer zweiten Phosphatglaszusammensetzung auf die Basisschicht; und

Erwärmen der Verbundwerkstoffstruktur auf eine Temperatur, die ausreichend ist, um eine Dichtungsschicht zu bilden, die an der Basisschicht anhaftet.

5. Verfahren nach Anspruch 4, wobei die zweite Aufschlämmung frei von Molybdändisulfid, Wolframdisulfid und Bornitrid ist.

6. Verfahren nach einem vorhergehenden Anspruch, wobei die erste Phosphatglaszusammensetzung durch die Formel $a(A'_2O)_x(P_2O_5)_{y1}b(G_fO)_{y2}c(A''O)_z$ dargestellt ist:

wobei A' aus Folgendem ausgewählt ist: Lithium, Natrium, Kalium, Rubidium, Cäsium und Mischungen davon;
$G_f$ aus Folgendem ausgewählt ist: Bor, Silizium, Schwefel, Germanium, Arsen, Antimon und Mischungen davon;
A'' aus Folgendem ausgewählt ist: Vanadium, Aluminium, Zinn, Titan, Chrom, Mangan, Eisen, Kobalt, Nickel, Kupfer, Quecksilber, Zink, Blei, Zirkonium, Lanthan, Cerium, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen davon;
a eine Zahl im Bereich von 1 bis 5 ist;
b eine Zahl im Bereich von 0 bis 10 ist;
c eine Zahl im Bereich von 0 bis 30 ist;
x eine Zahl im Bereich von 0,050 bis 0,500 ist;
$y_1$ eine Zahl im Bereich von 0,100 bis 0,950 ist;
$y_2$ eine Zahl im Bereich von 0 bis 0,20 ist; und
z eine Zahl im Bereich von 0,01 bis 0,5 ist;

$$(x + y_1 + y_2 + z) = 1;$$

und

$$x < (y_1 + y_2).$$

7. Artikel, umfassend:

eine Kohlenstoff-Kohlenstoff-Verbundwerkstoffstruktur; und
eine Oxidationsschutzzusammensetzung, die eine Basisschicht beinhaltet, die an einer Außenfläche der Verbundwerkstoffstruktur angeordnet ist, wobei die Basisschicht eine erste Phosphatglaszusammensetzung umfasst, die einen ersten Zusatzstoff aufweist, der in der gesamten Basisschicht dispergiert ist, wobei der erste Zusatzstoff zumindest eines von Molybdändisulfid oder Wolframdisulfid beinhaltet, und wobei die Basisschicht ferner einen zweiten Zusatzstoff umfasst, der Bornitrid beinhaltet,

**dadurch gekennzeichnet, dass** ein Verhältnis des ersten Zusatzstoffes zu dem zweiten Zusatzstoff 17:1 ist.

8. Artikel nach Anspruch 7, ferner umfassend eine Dichtungsschicht, die an einer Außenfläche der Basisschicht angeordnet ist, wobei die Dichtungsschicht eine zweite Phosphatglaszusammensetzung umfasst und wobei die Dichtungsschicht frei von Bornitrid, Molybdändisulfid und Wolframdisulfid ist.

9. Oxidationsschutzzusammensetzung, umfassend:

   eine erste Phosphatglaszusammensetzung, die einen ersten Zusatzstoff, der zumindest eines von Molybdändisulfid oder Wolframdisulfid beinhaltet, und einen zweiten Zusatzstoff, der Bornitrid beinhaltet, aufweist; und ein erstes Trägerfluid,
   **dadurch gekennzeichnet, dass** das Verhältnis des ersten Zusatzstoffes zu dem zweiten Zusatzstoff 17:1 ist.

10. Oxidationsschutzzusammensetzung nach Anspruch 9, wobei das erste Trägerfluid ein saures Aluminiumphosphat umfasst, und/oder wobei die erste Phosphatglaszusammensetzung durch die Formel $a(A'_2O)_x(P_2O_5)_{y_1}b(G_fO)_{y_2}c(A"O)_z$ dargestellt ist:

   wobei A' aus Folgendem ausgewählt ist: Lithium, Natrium, Kalium, Rubidium, Cäsium und Mischungen davon;
   $G_f$ aus Folgendem ausgewählt ist: Bor, Silizium, Schwefel, Germanium, Arsen, Antimon und Mischungen davon;
   A" aus Folgendem ausgewählt ist: Vanadium, Aluminium, Zinn, Titan, Chrom, Mangan, Eisen, Kobalt, Nickel, Kupfer, Quecksilber, Zink, Blei, Zirkonium, Lanthan, Cerium, Praseodym, Neodym, Samarium, Europium, Gadolinium, Terbium, Dysprosium, Holmium, Erbium, Thulium, Ytterbium, Actinium, Thorium, Uran, Yttrium, Gallium, Magnesium, Calcium, Strontium, Barium, Zinn, Wismut, Cadmium und Mischungen davon;
   a eine Zahl im Bereich von 1 bis 5 ist;
   b eine Zahl im Bereich von 0 bis 10 ist;
   c eine Zahl im Bereich von 0 bis 30 ist;
   x eine Zahl im Bereich von 0,050 bis 0,500 ist;
   $y_1$ eine Zahl im Bereich von 0,100 bis 0,950 ist;
   $y_2$ eine Zahl im Bereich von 0 bis 0,20 ist; und
   z eine Zahl im Bereich von 0,01 bis 0,5 ist;

$$(x + y_1 + y_2 + z) = 1;$$

   und

$$x < (y_1 + y_2).$$

**Revendications**

1. Procédé de revêtement d'une structure composite carbone-carbone, comprenant :

   l'application d'une première suspension d'une première composition de verre au phosphate sur une surface externe de la structure composite, dans lequel la première suspension comprend un premier additif comportant au moins l'un parmi le disulfure de molybdène ou le disulfure de tungstène et un second additif comportant du nitrure de bore ; et
   le chauffage de la structure composite à une température suffisante pour former une couche de base collée à la structure composite,
   **caractérisé en ce que** le rapport du premier additif au second additif est de 17:1.

2. Procédé selon la revendication 1, comprenant en outre la formation d'une première composition de pré-suspension en combinant le premier additif avec une première fritte de verre comprenant la première composition de verre au phosphate.

3. Procédé selon la revendication 2, dans lequel le procédé comprend en outre la formation de la première suspension en combinant la première composition de pré-suspension avec un premier fluide porteur, dans lequel le premier fluide porteur comprend un phosphate d'aluminium acide.

4. Procédé selon une quelconque revendication précédente, comprenant en outre :

l'application d'une seconde suspension d'une seconde composition de verre au phosphate sur la couche de base; et
le chauffage de la structure composite à une température suffisante pour former une couche d'étanchéité collée à la couche de base.

5. Procédé selon la revendication 4, dans lequel la seconde suspension est exempte de disulfure de molybdène, de disulfure de tungstène et de nitrure de bore.

6. Procédé selon une quelconque revendication précédente, dans lequel la première composition de verre au phosphate est représentée par la formule $a(A'_2O)_x(P_2O_5)_{y1}b(G_fO)_{y2}c(A''O)_z$ :

A' est choisi parmi : le lithium, le sodium, le potassium, le rubidium, le césium et des mélanges de ceux-ci ;
$G_f$ est choisi parmi : le bore, le silicium, le soufre, le germanium, l'arsenic, l'antimoine et des mélanges de ceux-ci ;
A'' est choisi parmi : le vanadium, l'aluminium, l'étain, le titane, le chrome, le manganèse, le fer, le cobalt, le nickel, le cuivre, le mercure, le zinc, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et des mélanges de ceux-ci ;
a est un nombre compris entre 1 et 5 ;
b est un nombre compris entre 0 et 10 ;
c est un nombre compris entre 0 et 30 ;
x est un nombre compris entre 0,050 et 0,500 ;
$y_1$ est un nombre compris entre 0,100 et 0,950 ;
$y_2$ est un nombre compris entre 0 et 0,20 ; et
z est un nombre compris entre 0,01 et 0,5 ;

$$(x + y_1 + y_2 + z) = 1 ;$$

et

$$x < (y_1 + y_2).$$

7. Article comprenant :

une structure composite carbone-carbone ; et
une composition de protection contre l'oxydation comportant une couche de base disposée sur une surface externe de la structure composite, dans lequel la couche de base comprend une première composition de verre au phosphate ayant un premier additif dispersé à travers la couche de base, le premier additif comportant au moins l'un parmi le disulfure de molybdène ou le disulfure de tungstène, et dans lequel la couche de base comprend en outre un second additif comportant du nitrure de bore,
**caractérisé en ce qu'**un rapport du premier additif au second additif est de 17:1.

8. Article selon la revendication 7, comprenant en outre une couche d'étanchéité disposée sur une surface externe de la couche de base, dans lequel la couche d'étanchéité comprend une seconde composition de verre au phosphate et dans lequel la couche d'étanchéité est exempte de nitrure de bore, de disulfure de molybdène et de disulfure de tungstène.

9. Composition de protection contre l'oxydation, comprenant :

une première composition de verre au phosphate ayant un premier additif comportant au moins l'un parmi le disulfure de molybdène ou le disulfure de tungstène et un second additif comportant du nitrure de bore; et un premier fluide porteur,
**caractérisé en ce que** le rapport du premier additif au second additif est de 17:1.

10. Composition de protection contre l'oxydation selon la revendication 9, dans laquelle le premier fluide porteur comprend un phosphate d'aluminium acide et/ou dans laquelle la première composition de verre au phosphate est représentée par la formule $a(A'_2O)_x(P_2O_5)_{y1}b(G_fO)_{y2}c(A"O)_z$ :

A' est choisi parmi : le lithium, le sodium, le potassium, le rubidium, le césium et des mélanges de ceux-ci ;
$G_f$ est choisi parmi : le bore, le silicium, le soufre, le germanium, l'arsenic, l'antimoine et des mélanges de ceux-ci ;
A" est choisi parmi : le vanadium, l'aluminium, l'étain, le titane, le chrome, le manganèse, le fer, le cobalt, le nickel, le cuivre, le mercure, le zinc, le plomb, le zirconium, le lanthane, le cérium, le praséodyme, le néodyme, le samarium, l'europium, le gadolinium, le terbium, le dysprosium, l'holmium, l'erbium, le thulium, l'ytterbium, l'actinium, le thorium, l'uranium, l'yttrium, le gallium, le magnésium, le calcium, le strontium, le baryum, l'étain, le bismuth, le cadmium et des mélanges de ceux-ci ;
a est un nombre compris entre 1 et 5 ;
b est un nombre compris entre 0 et 10 ;
c est un nombre compris entre 0 et 30 ;
x est un nombre compris entre 0,050 et 0,500 ;
$y_1$ est un nombre compris entre 0,100 et 0,950 ;
$y_2$ est un nombre compris entre 0 et 0,20 ; et
z est un nombre compris entre 0,01 et 0,5 ;

$$(x + y_1 + y_2 + z) = 1 ;$$

et

$$x < (y_1 + y_2).$$

FIG.1A

FIG.1B

FIG.2A

300

FORM A FIRST SLURRY — 210

↓

APPLY THE FIRST SLURRY TO A COMPOSITE STRUCTURE — 220

↓

HEAT THE COMPOSITE STRUCTURE TO FORM A BASE LAYER OF PHOSPHATE GLASS — 230

↓

FORM A SECOND SLURRY AND APPLY TO THE BASE LAYER — 240

↓

HEAT THE COMPOSITE STRUCTURE TO FORM A SEALING LAYER OVER THE BASE LAYER — 250

# FIG. 2B

400

APPLY AT LEAST ONE OF A
PRETREATING COMPOSITION
OR A BARRIER COATING — 215

↓

FORM A FIRST SLURRY — 210

↓

APPLY THE FIRST SLURRY TO
A COMPOSITE STRUCTURE — 220

↓

HEAT THE COMPOSITE
STRUCTURE TO FORM A BASE
LAYER OF PHOSPHATE
GLASS — 230

↓

FORM A SECOND SLURRY
AND APPLY TO THE BASE
LAYER — 240

↓

HEAT THE COMPOSITE
STRUCTURE TO FORM A
SEALING LAYER OVER THE
BASE LAYER — 250

FIG.2C

FIG.3

FIG.4

Legend:
- ◇ (dashed) PRE-TREATMENT / SEALING LAYER B
- ● PRE-TREATMENT / BASE LAYER F/SEALING LAYER A
- ○ BASE LAYER F / SEALING LAYER B
- ■ BASE LAYER F / SEALING LAYER A
- ◆ PRE-TREATMENT / SEALING LAYER A

760°C

PERCENT WEIGHT LOSS vs EXPOSURE TIME (HOURS)

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2767529 A